# EUROPEAN PATENT APPLICATION

(11) **EP 3 499 422 A1**
(43) Date of publication of application: **19.06.2019**
(21) Application number: 18192114.9
(22) Date of filing: 31.08.2018
(51) Int. Cl.: G06K 19/07

(54) **CONTAINER LOCATING SYSTEM, METHOD AND ELECTRONIC TAG**

(30) Priority: 18.12.2017 CN 201711367597
(71) Applicant: Beijing Apollo Ding Rong Solar Technology Co., Ltd., Beijing 100176 (CN)
(72) Inventor: CAO, Zhifeng, BEIJING, 100176 (CN); WANG, Yunfang, BEIJING, 100176 (CN); DAI, Fengyu, BEIJING, 100176 (CN); HUO, Yanyin, BEIJING, 100176 (CN)
(74) Representative: Allain, Laurent

(57) **Abstract**

A container locating system and method, and an electronic tag are disclosed. The system includes: an electronic tag (10), a reader/writer (30) and a detection module (20). The electronic tag is disposed on the container and stores product identification information of the container; the detection module transmits a first level signal to the electronic tag when the detection module detects that the stored electrical capacity of the electronic tag is greater than a preset electrical capacity threshold; the electronic tag transmits, upon receiving the first level signal, an information acquisition signal to other electronic tags within a designated area to cause said other electronic tags to transmit their respective stored product identification information to the electronic tag; the reader/writer reads product identification information stored in the electronic tag to determine a location of a container.

## Description

### CROSS-REFERENCE TO RELATED APPLICATION

The present application claims priority of Chinese patent application No. 201711367597.3 filed with China State Intellectual Property Office on December 18, 2017, the entire contents of which are incorporated herein by reference.

### TECHNICAL FIELD

The present disclosure relates the technical field of photovoltaic power generation, and particularly relates to a container locating system, a container locating method, and an electronic tag.

### BACKGROUND

Electronic tags based on Radio Frequency Identification (RFID) technology have functions such as identity recognition, goods tracking and information collection. Currently, RFID electronic tags are widely used in the Internet of Things, and it is becoming more and more important to locate a target object by locating the RFID tag. A commonly used RFID electronic tag locating method is as follows: an electronic tag reader/writer transmits radio-frequency signals of different frequencies; the electronic tag reader/writer then measures a distance from an RFID electronic tag to the electronic tag reader/writer according to a degree of attenuation of the received RF signal returned by the RFID electronic tag, thereby determining a range of location of the RFID electronic tag.

However, in some special applications, the distance between the reader/writer and the electronic tag to be measured is too large or the space between the reader/writer and the electronic tag is blocked by an obstacle, thus a lot of labor or financial resources may be required to achieve data interaction. For example, containers at a dock or on a transport ship need to be stacked together due to a limited stacking space, which may make the reader/writer unable to read/write the data of, and thus unable to locate, the electronic tag.

In addition, when used for a container, the existing RFID electronic tag can hardly completely get rid of a fixed grid and work independently, and can hardly obtain locations of all containers within a designated area through limited times of reading and writing by the reader/writer.

### SUMMARY

According to an aspect of the disclosure, there is provided a container locating system comprising an electronic tag, a reader/writer and a detection module. The electronic tag is disposed on the container and configured to store product identification information of the container, the product identification information containing location information of the container on which the electronic tag is located. The detection module is configured to detect a stored electrical capacity of the electronic tag, and transmit a first level signal to the electronic tag when the stored electrical capacity is greater than a preset electrical capacity threshold. The electronic tag is further configured to enter, upon receiving the first level signal, a read/write operation mode and transmit an information acquisition signal to other electronic tags within the designated area to cause said other electronic tags to transmit their respective stored product identification information to the electronic tag; after receiving the product identification information transmitted from said other electronic tags, the electronic tag stores the received product identification information transmitted from said other electronic tags. The reader/writer is configured to read the respective product identification information stored in the electronic tag to determine locations of containers within the designated area.

In an exemplary embodiment, the detection module and the electronic tag are further configured such that: the detection module transmits a second level signal to the electronic tag upon detecting that the stored electrical capacity of the electronic tag is not greater than the preset electrical capacity threshold; the electronic tag enters, upon receiving the second level signal, a response operation mode; and in the response operation mode, the electronic tag transmits, after receiving information acquisition signals transmitted from said other electronic tags, the product identification information to said other electronic tags.

In an exemplary embodiment, the electronic tag is further configured to set a container corresponding to the electronic tag as a reader container upon receiving the first level signal, and set the container corresponding to the electronic tag as a transponder container upon receiving the second level signal. The reader/writer obtains, by reading the electronic tag of the reader container, the product identification information to determine a location of each container within the designated area.

In an exemplary embodiment, the container locating system further includes: a wireless communication module. The reader/writer is further configured to perform data interaction with the electronic tag through the wireless communication module, and set at least one of the reader containers as main reader container through the wireless communication module. The electronic tag on the main reader container is further configured to read and store product identification of other reader containers. The reader/writer reads information stored in the electronic tag of the main reader container to determine the location of each container, the information being the product identification information transmitted from the electronic tag of said other reader containers.

In an exemplary embodiment, the electronic tag includes a read/write module, a response module and a main processor. The main processor is connected to the wireless communication module, the read/write module and the response module through a serial port, respectively, and an input end of the main processor serves as an input end of the electronic tag. The read/write module is configured to transmit the information acquisition signal and store the received product identification information. The response module is configured to receive the information acquisition signal and transmit the product identification information.

In an exemplary embodiment, the electronic tag further includes a photovoltaic power supply module and an energy storage battery. An output end of the photovoltaic power supply module is connected to an input end of the energy storage battery, the energy storage battery supplying power to the main processor, the read/write module and the response module. The photovoltaic power supply module is configured to convert solar energy into electrical power and charge the energy storage battery.

In an exemplary embodiment, the photovoltaic power supply module includes a photovoltaic cell and a power control circuit. An input end of the power control circuit is connected to an output end of the photovoltaic cell, an output end of the power control circuit serves as the output end of the photovoltaic power supply module, and the power control circuit is configured to control current convergence and voltage regulation output of the photovoltaic cell. The photovoltaic cell is configured to convert solar energy into electrical power to charge the energy storage battery.

In an exemplary embodiment, the read/write module includes a first antenna, a second antenna, a first transceiver module and a first microprocessor. The first microprocessor is connected to the first transceiver module through a serial port, the first transceiver module transmits the information acquisition signal through the first antenna, and the first transceiver module receives the product identification information through the second antenna.

In an exemplary embodiment, the response module includes a third antenna, a fourth antenna, a second transceiver module and a second microprocessor. The second microprocessor is connected to the second transceiver module through a serial port, the second transceiver module transmits the product identification information through the third antenna, and the second transceiver module receives the information acquisition signal through the fourth antenna.

In an exemplary embodiment, the detection module includes an electrical capacity sensor and a third microprocessor. A first input end of the third microprocessor is connected to an output end of the electrical capacity sensor, the electrical capacity sensor is configured to detect a stored electrical capacity of the energy storage battery, and the third microprocessor is configured to transmit the first level signal when the stored electrical capacity is greater than the preset electrical capacity threshold, and transmit the second level signal when the stored electrical capacity is not greater than the preset electrical capacity threshold.

In an exemplary embodiment, the detection module further includes: an irradiance sensor. An output end of the irradiance sensor is connected to a second input end of the third microprocessor, and the irradiance sensor is configured to detect an intensity of solar irradiance received by the photovoltaic power supply module. When the intensity of solar irradiance is greater than a preset intensity threshold, the third microprocessor transmits a charging signal to the electronic tag to trigger the power control circuit to charge the energy storage battery.

In an exemplary embodiment, the electronic tag and the detection module are formed integrally.

In an exemplary embodiment, in the read/write operation mode, the electronic tag determines, after receiving the product identification information from said other electronic tags, a signal strength of the received product identification information, and stores the signal strength while storing the received product identification information.

In an exemplary embodiment, in the read/write operation mode, the electronic tag measures a time interval between a time when the electronic tag transmits the information acquisition signal and a time when the electronic tag receives the corresponding product identification information, and stores the time interval while storing the received product identification information.

In an exemplary embodiment, the reader/writer is configured to read the respective product identification information from other electronic tags and the respective time intervals and/or signal strengths corresponding to the product identification information stored in the electronic tag, to determine the distance between the container on which the electronic tag is located and each of the containers on which said other electronic tags are located.

According to another aspect of the disclosure, there is provided a container locating method, comprising: providing an electronic tag for each of a plurality of stacked containers, the electronic tag storing product identification information containing location information of the container on which the electronic tag is located; detecting, by a detection module, a stored electrical capacity of the electronic tag, transmitting a first level signal to the electronic tag when the stored electrical capacity is greater than a preset electrical capacity threshold, and transmitting a second level signal to the electronic tag when the stored electrical capacity of the electronic tag is not greater than the preset electrical capacity threshold; causing the electronic tag to enter a read/write operation mode when the electronic tag receives the first level signal, and transmitting, by the electronic tag, an information acquisition signal to other electronic tags within a designated area to cause said other electronic tags to transmit their respective stored product identification information to the electronic tag; the electronic tag storing, after receiving the product identification information transmitted from said other electronic tags, the received product identification information; storing, by the electronic tag, the received product identification information after receiving the product identification information from said other electronic tags; and reading the respective product identification information stored in the electronic tag to determine a location of a container within the designated area.

In an exemplary embodiment, the container locating method further includes: causing the electronic tag to enter a response operation mode when the electronic tag receives the second level signal; and transmitting, by the electronic tag after the electronic tag in the response operation mode receives an information acquisition signal, the product identification information to an electronic tag having transmitted the information acquisition signal.

In an exemplary embodiment, the container locating method further includes: setting a container corresponding to the electronic tag as a reader container when the first level signal is received, and setting the container corresponding to the electronic tag as a transponder container when the second level signal is received; and obtaining a location of a container within the designated area by reading the electronic tag of the reader container.

In an exemplary embodiment, the container locating method further includes: setting at least one of the reader containers as main reader container, wherein the electronic tag on the main reader container is further configured to read and store product identification information transmitted from electronic tags of other reader containers; and reading the product identification information transmitted from the electronic tags of said other reader containers and stored in the electronic tag of the main reader container, to determine the location of each container.

In an exemplary embodiment, the electronic tag is powered by solar energy.

In an exemplary embodiment, in the read/write operation mode, the electronic tag determines, after receiving the product identification information transmitted from said other electronic tags, a signal strength of the received product identification information, and stores the signal strength while storing the received product identification information.

In an exemplary embodiment, in the read/write operation mode, the electronic tag measures a time interval between a time when the electronic tag transmits the information acquisition signal and a time when the electronic tag receives the corresponding product identification information, and stores the time interval while storing the received product identification information.

In an exemplary embodiment, the step of reading the respective product identification information stored in the electronic tag to determine a location of a container within the designated area includes: reading the respective product identification information transmitted from said other electronic tags and the respective time intervals and/or signal strengths corresponding to the product identification information stored in the electronic tag, to determine the distance between the container on which the electronic tag is located and each of the containers on which said other electronic tags are located.

According to another aspect of the disclosure, there is provided a method of locating a container through an electronic tag, the electronic tag being disposed on a corresponding container, the method comprising: storing product identification information of the container, the product identification information containing location information of the container on which the electronic tag is located; transmitting, by a detection module of the electronic tag, a first level signal to the electronic tag when the detection module detects that a stored electrical capacity of the electronic tag is greater than a preset electrical capacity threshold, thereby the electronic tag enters a read/write operation mode; transmitting, by the electronic tag in the read/write operation mode, an information acquisition signal to other electronic tags within a designated area, and storing, by the electronic tag after the electronic tag receives product identification information transmitted from said other electronic tags, the received product identification information; transmitting, by the detection module, a second level signal to the electronic tag when the detection module detects that the stored electrical capacity of the electronic tag is not greater than the preset electrical capacity threshold, thereby the electronic tag enters a response operation mode; and transmitting, by the electronic tag after the electronic tag in the response operation mode receives an information acquisition signal, the product identification information of its corresponding container to an electronic tag having transmitted the information acquisition signal.

In an exemplary embodiment, the container locating method further includes: providing, by the electronic tag when it is in the read/write operation mode, the stored product identification information of each of said other electronic tags to a reader/writer so that the reader/writer can determines a location of a container within the designated area according to the product identification information.

In an exemplary embodiment, the container locating method further includes: converting, by a photovoltaic cell, solar energy into electrical power to charge the electronic tag.

According to another aspect of the present disclosure, there is provided an electronic tag, the electronic tag is disposed on a container, and comprises: a photovoltaic power supply module which is configured to convert solar energy into electrical power and output the electrical power to an energy storage battery; the energy storage battery which is configured to store the electricity (electrical power) output from the photovoltaic power supply module; a detection module which is configured to detect a stored electrical capacity of the energy storage battery so that when the stored electrical capacity is greater than a preset electrical capacity, the electronic tag enters a read/write operation mode, and when the stored electrical capacity is not greater than the preset electrical capacity, the electronic tag enters a response operation mode; a read-write module which is configured to transmit an information acquisition signal to other electronic tags within a designated area when the electronic tag enters the read-write operation mode, and to store, upon receiving product identification information transmitted from said other electronic tags, the received product identification information; and a response module which is configured to transmit, when the electronic tag has entered the response operation mode and after the electronic tag receives an information acquisition signal, product identification information of its corresponding container to an electronic tag having transmitted the information acquisition signal.

In an exemplary embodiment, in the electronic tag, the read-write module is further configured to provide a reader/writer with the stored product identification information transmitted from each of said other electronic tags so that the reader/writer can determines a location of a container within the designated area according to the product identification information.

The present disclosure provides a container locating system and method and an electronic tag, which enable the electronic tag to read and write product identification information stored in an electronic tag within a designated area by determining a read/write operation mode or a response operation mode of the electronic tag through a stored electrical capacity of the electronic tag, and solve the problem of read/write failures caused by a too large distance or obstacles when using a reader/writer in the related art to read/write data in electronic tags of stacked containers, thus realizing a device deployment mode of not distinguishing the transponder and the reader/writer, improving the intelligence and practicability of the electronic tag and work efficiency of container information management, as well as flexibility and simplicity in freight yard layout, and reducing labor cost.

### BRIEF DESCRIPTION OF THE FIGURES

In order to more clearly illustrate specific embodiments of the present disclosure, the drawings to be used in the embodiments will be briefly described below.
Fig. 1 is a structural schematic view of a container locating system provided in the disclosure;
Fig. 2 is an operation schematic view of a container locating system provided in the disclosure;
Fig. 3 is a structural schematic view of an electronic tag provided in an embodiment of the disclosure;
Fig. 4 is a flowchart of a container locating method provided in the disclosure; and
Fig. 5 is a structural schematic view of another electronic tag provided in an embodiment of the disclosure.

### DETAILED DESCRIPTION

In order to make those skilled in the art better understand solutions of the embodiments of the disclosure, the embodiments of the disclosure will be further described in detail below with reference to the accompanying drawings. It is noted that, as used in this specification and the appended claims, the term "a" or "an" includes plural referents unless expressly and unequivocally limited to one referent.

With regard to the problems in the related art, such as read/write failures caused by a too large distance or by blocking of obstacles when a reader/writer is reading/writing data in electronic tags on stacked containers, and that when used for a container, the existing RFID electronic tag can hardly completely get rid of a fixed grid and work independently, and can hardly obtain locations of all containers within a designated area through limited times of reading and writing of the reader/writer, the present disclosure provides a container locating system and method and an electronic tag, which turn on a read/write operation mode or a response operation mode of an electronic tag according to a stored electrical capacity of the electronic tag such that the electronic tag can read product identification information stored in other electronic tags within a designated area.

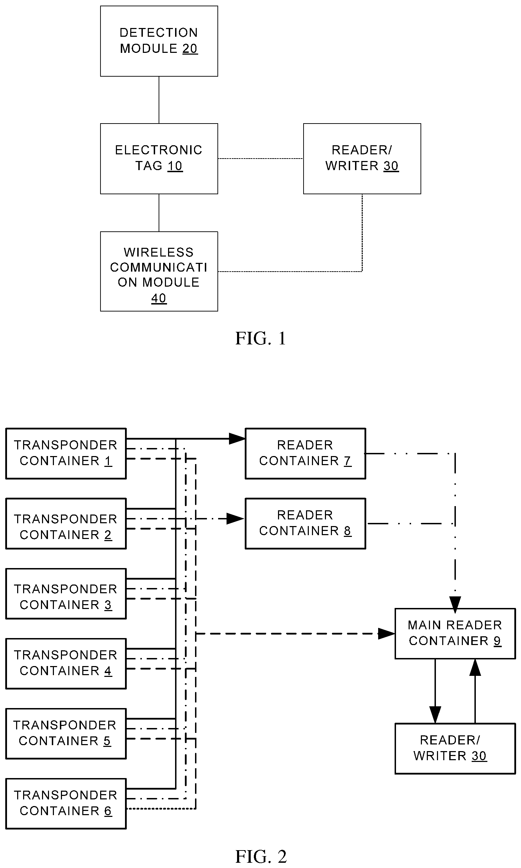

As shown in Figs. 1 to 2, a container locating system according to the embodiment includes an electronic tag 10, a reader/writer 30 and a detection module 20. The electronic tag 10 is disposed on a corresponding container 1 to 9 and configured to store product identification information of the container on which the electronic tag 10 is located. The detection module 20 is configured to detect a stored electrical capacity of its corresponding electronic tag 10, and transmit a first level signal to the electronic tag 10 when the stored electrical capacity is greater than a preset electrical capacity threshold. The electronic tag 10 enters a read/write operation mode upon receiving the first level signal, and transmit an information acquisition signal to other electronic tags within the designated area so that said other electronic tags transmit their respective stored product identification information to the electronic tag 10; and after receiving the product identification information transmitted from said other electronic tags, the electronic tag 10 stores the received product identification information. The reader/writer 30 is configured to read the respective product identification information stored in the electronic tag 10 to determine a location of a container within the designated area.

The product identification information in the disclosure contains an ID number of the electronic tag (which also represents the ID number of the container on which the electronic tag is located), location information indicating a location of the container on which the electronic tag is located, and extended data information (e.g., temperature, humidity, parameters of objects within the container, etc.) of the container on which the electronic tag is located. The location information of the container is information reflecting the location of the container, for example, relative location information of the container relative to another adjacent container, or GPS information, or the like.

In an example, the detection module 20 and the electronic tag 10 are further configured such that: the detection module 20 transmits a second level signal to the electronic tag 10 upon detecting that the stored electrical capacity of the electronic tag 10 is not greater than the preset electrical capacity threshold; the electronic tag 10 enters a response operation mode upon receiving the second level signal; and in the response operation mode, the electronic tag 10 transmits its product identification information to other electronic tags after receiving the information acquisition signal from said other electronic tags.

In practical applications, the electronic tag 10 may use a first RF (Radio Frequency) signal as the information acquisition signal, and transmit the product identification information through a second RF signal. The first RF signal is transmitted when the electronic tag 10 enters the read/write operation mode; after receiving the first RF signal, said other electronic tags transmit the second RF signal carrying the product identification information; and after receiving the second RF signal, the electronic tag 10 reads and stores the product identification information carried in the second RF signal. Herein, the first and second RF signals may be electromagnetic waves of different frequencies.

It should be noted that the electronic tag 10 may serve as a reader when having entered the read/write operation mode, and serve as a transponder when having entered the response operation mode. Upon receiving the information acquisition signal, the electronic tag 10 generates an electronic code or data segment based on the stored product identification information and transmits the electronic code or data segment. Upon receiving the electronic code or data segment, the reader/writer 30 or the reader decodes the electronic code or data segment to obtain the product identification information.

In an example, the electronic tag 10 may serve as both a reader and a transponder (transmitting the product identification information of the container on which it is located in response to an information acquisition signal transmitted from another electronic tag as a reader) when having entered the read/write operation mode, but only serve as a transponder instead of a reader when having entered the response operation mode.

In another example, the electronic tag 10 may only serve as a reader instead of a transponder when having entered the read/write operation mode, and may only serve as a transponder instead of a reader when having entered the response operation mode.

In an example, the electronic tag 10 and the detection module 20 are formed integrally. In this case, the detection module 20 may, for example, be powered by the electronic tag 10.

In an example, the designated area is an area corresponding to a read range of the electronic tag 10.

In an example, the product identification information contains location information indicating a location of a corresponding container (i.e., a location of a corresponding electronic tag). By reading the product identification information stored in the electronic tag 10 and from other electronic tags, the reader/writer 30 may determine the locations of the containers on which said other electronic tags are located, respectively.

In another example, upon receiving the product identification information from other electronic tags, the electronic tag 10 determines a signal strength of the product identification information, and then stores both the product identification information and the signal strength. Thus, by reading the product identification information and the signal strength thereof from said other electronic tags stored in the electronic tag 10, the reader/writer 30 may determine distances from the electronic tag 10 to the respective other electronic tags, thereby indirectly determining the locations of the containers on which said other electronic tags are located

In an example, the container locating system includes the foregoing "other electronic tags", and each electronic tag in the container locating system cooperates with one detection module.

In an example, the detection module is configured to detect a stored electrical capacity of the electronic tag periodically so as to transmit the first or second level signal to the electronic tag periodically.

In an example, the electronic tag 10 is further configured to set a container corresponding to the electronic tag as a reader container 7 to 9 upon receiving the first level signal, and set a container corresponding to the electronic tag as a transponder container 1 to 6 upon receiving the second level signal. The reader/writer 30 obtains a location of each container within the designated area by reading the electronic tags 10 of the reader containers 7 to 9.

In an example, the electronic tags on the reader containers 7 to 9 transmit the information acquisition signal to cause the electronic tags of the transponder containers 1 to 6 within the designated area to transmit their respective stored product identification information after receiving the information acquisition signal. After receiving the product identification information transmitted from the electronic tags of the transponder containers 1 to 6, the electronic tags of the reader containers 7 to 9 store the received product identification information.

In an example, the container locating system may further include a wireless communication module 40. The reader/writer 30 is further configured to perform data interaction with the electronic tag 10 through the wireless communication module 40, and set at least one of the reader containers as main reader container 9 through the wireless communication module 40. The electronic tag on the main reader container 9 is further configured to read and store product identification information transmitted from the electronic tags of other reader containers 7, 8. The reader/writer 30 reads the product identification information transmitted from the electronic tags of the reader containers 7, 8 and stored in the electronic tag of the main reader container 9 to determine the location of each container.

In an example, for example, when a plurality of containers with electronic tags are stacked together, an RF communication network will be automatically or passively formed. For some of the containers which are disposed on an outer side of the stack and are exposed to light, if the stored electrical capacity of the electronic tag is greater than the preset electrical capacity threshold, the electronic tag will automatically become a reader, and the container will become a reader container and may serve to recognize and read other containers. The electronic tags on the containers, which containers are disposed on an inner side of the stack and are less illuminated or non-illuminated, will automatically become transponders, and thereby passively respond to the recognition and query of the reader, and these containers thus become transponder containers. An operator may set one reader container as the main reader container through a man-machine operating circuit of the electronic tag, or a reader or mobile terminal installed with upper computer software. At this time, the main reader container will collect time period of response of each transponder container calculated by other reader containers (i.e., a time interval between a time when the reader container transmits the information acquisition signal and a time when the reader container receives the product identification information); from the time periods, a distance between the transponder container and the reader container is calculated, the relative positions of all containers are thus calculated. It is also possible to use the wireless communication module to collect extended data information of each container (e.g., temperature, humidity, or other data reported from an extended device in the container). By simply reading the electronic tag of the main reader container, the reader/writer can obtain the product identification information of other containers. It should be noted that the product identification information contains the location information indicating a location of the container corresponding to the product identification information.

In another example, for example, each of the electronic tags on other reader containers 7, 8 except the main reader container 9, when receiving the information acquisition signal transmitted from the electronic tag of the main reader container 9, transmits the product identification information of the container on which it is located, as well as the product identification information transmitted from other electronic tags and the corresponding signal strength of the production identification information (or the distance from said other electronic tags thereto determined by the signal strength) stored therein, to the electronic tag of the main reader container 9.

In practical applications, the location of a container may be determined by a triangulation location method. That is, the location of any container may be determined by using at least three readers to perform distance determination for a transponder corresponding to the container. With the locations of the three reader containers as centers, respectively, and the respective distances to the transponder container as radii, a point at which the three circles (or spheres) intersect is the location of the transponder container. As mentioned above, the distance between the reader container and the transponder container may be determined by measuring the time interval between a time when the electronic tag on the reader container transmits the information acquisition signal and a time when the electronic tag receives the corresponding product identification information, and/or by measuring a strength of the signal received by the reader container from the transponder container.

It should be noted that if the reader/writer 30 is close to the reader or the transponder, the reader/writer 30 may read and write the product identification information of the reader or the transponder directly through a signal. Of course, the reader/writer 30 may also read and write through the wireless communication module 40.

In addition, in an example, if the electronic tag read by the reader/writer 30 is an electronic tag that has entered the response operation mode, that is, an electronic tag of the transponder container, the electronic tag may be temporarily powered or charged through a charging device or through the reader/writer 30 itself, so that the electronic tag can enter the read/write operation mode, transmit the information acquisition signal as a reader tag, and obtain the product identification information of other electronic tags within the designated area.

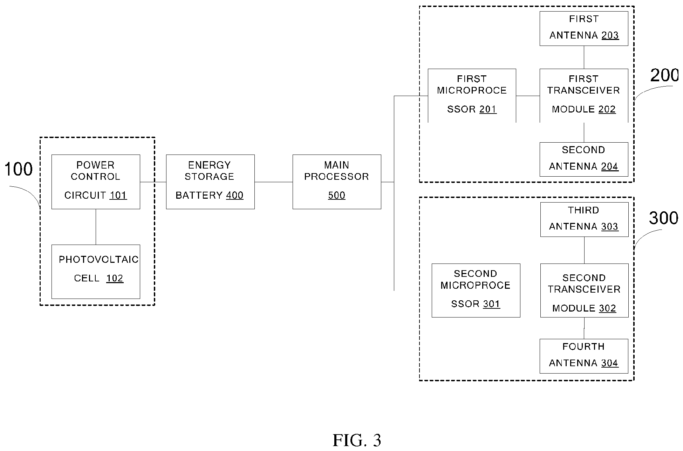

In an example, as shown in Fig. 3, the electronic tag may include a read/write module 200, a response module 300, and a main processor 500. The main processor 500 may be connected to the wireless communication module (not shown in Fig. 3), the read/write module 200 and the response module 300 through a serial port, respectively, and an input end of the main processor 500 serves as an input end of the electronic tag 10. The read/write module 200 is configured to transmit the information acquisition signal and store the received product identification information; the response module 300 is configured to receive the information acquisition signal and transmit the product identification information.

Further, the electronic tag 10 may further include a photovoltaic power supply module 100 and an energy storage battery 400. An output end of the photovoltaic power supply module 100 is connected to an input end of the energy storage battery 400, and the energy storage battery 400 supplies power to the main processor 500, the read/write module 200 and the response module 300. The photovoltaic power supply module 100 is configured to convert solar energy into electrical power to charge the energy storage battery 400. In practical applications, the energy storage battery 400 may be implemented by lithium battery.

Further, the photovoltaic power supply module 100 may include a photovoltaic cell 102 and a power control circuit 101. An input end of the power control circuit 101 is connected to an output end of the photovoltaic cell 102, an output end of the power control circuit 101 serves as the output end of the photovoltaic power supply module 100, the power control circuit 101 is configured to control current convergence and voltage regulation output of the photovoltaic cell 102, and the photovoltaic cell 102 is configured to convert solar energy into electrical power.

In practical applications, the power control circuit 101 may implement a design of a maximum power tracking circuit and a DCDC voltage regulation circuit, and convert a floating photovoltaic power generation into a stable DC power source such as 5V or 12V power source, for use by electrical equipments. The energy is stored in the battery when there is a surplus in photovoltaic power generation. Meanwhile, the power control circuit 101 may be designed with a voltage power detection function, a power output on/off control function, and a communication function. The power control circuit 101 may turn on or off the power supply when the battery energy (electricity) is consumed to a predetermined value or a control circuit command is received.

The container locating system may further include a charging control module (not shown). An input end of the charging control module is connected to an output end of the energy storage battery 400, and an output end of the charging control module is connected to a control terminal of the photovoltaic power supply module 100. The charging control module may include an electrical capacity detection module configured to detect an electrical capacity of the energy storage battery 400. The charging control module controls the photovoltaic power supply module 100 to charge the energy storage battery when the electrical capacity of the energy storage battery 400 is not greater than the preset electrical capacity threshold.

As shown in Fig. 3, the read/write module 200 may include a first antenna 203, a second antenna 204, a first transceiver module 202 and a first microprocessor 201. The first microprocessor 201 is connected to the first transceiver module 202 through a serial port. The first transceiver module 202 transmits the information acquisition signal through the first antenna 203 and receives the product identification information through the second antenna 204.

The response module may include a third antenna 303, a fourth antenna 304, a second transceiver module 302 and a second microprocessor 301. The second microprocessor 301 may be connected to the second transceiver module 302 through a serial port. The second transceiver module 302 transmits the product identification information through the third antenna 303, and the second transceiver module 302 receives the information acquisition signal through the fourth antenna 304.

In practical applications, the read/write module and the response module may implement RF identification technology for transmitting and receiving the information acquisition signals and product identification information through RF signals of different frequencies.

In an example, the detection module 20 may include an electrical capacity sensor and a third microprocessor (not shown). A first input end of the third microprocessor is connected to an output end of the electrical capacity sensor configured to detect a stored electrical capacity of the energy storage battery, and the third microprocessor is configured to transmit the first level signal when the stored electrical capacity is greater than the preset electrical capacity threshold, and transmit the second level signal when the stored electrical capacity is not greater (e.g., less) than the preset electrical capacity threshold.

In an example, the detection module 20 may further include an irradiance sensor (not shown). An output of the irradiance sensor is connected to a second input end of the third microprocessor, and the irradiance sensor is configured to detect an intensity of solar irradiance received by the photovoltaic power supply module 100. When the intensity of solar irradiance is greater than a preset intensity threshold, the third microprocessor transmits a charging signal to the electronic tag 10 to trigger the power control circuit 101 to charge the energy storage battery 400.

In practical applications, the container locating system may further include an interface module and a man-machine interaction module (not shown). The interface module may be connected to the main processor 500 through a serial port and used as an interface for external data input and output, for example, obtaining external data through a temperature sensor, a humidity sensor, or a GPS chip. The man-machine interaction module is connected to the main processor 500 through the interface module, and is configured to display or read and write the product identification information, so as to realize remote monitoring of the man-machine interaction or upper computer by the operator.

As can be seen, the present disclosure provides a container locating system which turns on a read/write operation mode or a response operation mode of an electronic tag according to a stored electrical capacity of the electronic tag so that the electronic tag can read product identification information stored in other electronic tags within a designated area. With the container locating system, the user may obtain information about other tags within the designated area through an electronic tag which could be readily read, thereby solving the problem of read/write failures caused by a too large distance or by blocking with obstacles when the reader/writer is reading/writing data in electronic tags on stacked containers, realizing a device deployment mode without distinguishing the transponder and the reader/writer, improving the intelligence and practicability of the electronic tag and the work efficiency of container information management, as well as flexibility and simplicity in freight yard layout, and reducing labor cost. On the other hand, when the electronic tags are powered by solar energy, due to different locations and other reasons, some electronic tags are exposed to sufficient light, and have a larger stored electrical capacity (remaining electrical capacity), while other electronic tags are less (or not) exposed to light and have a smaller stored electrical capacity (remaining electrical capacity). In this case, the container locating system provided by the present disclosure can minimize the power consumption of the electronic tag when its stored electrical capacity is small, thus ensuring a long-term stable operation of the system, and realizing a true mobile operation independent of a fixed grid.

In addition, the present disclosure also provides an electronic tag which is the electronic tag 10 used in the container locating system described above. The electronic tag 10 is disposed on the container, and may cooperate with the detection module 20, the wireless communication module 40 and the reader/writer 30 described above.

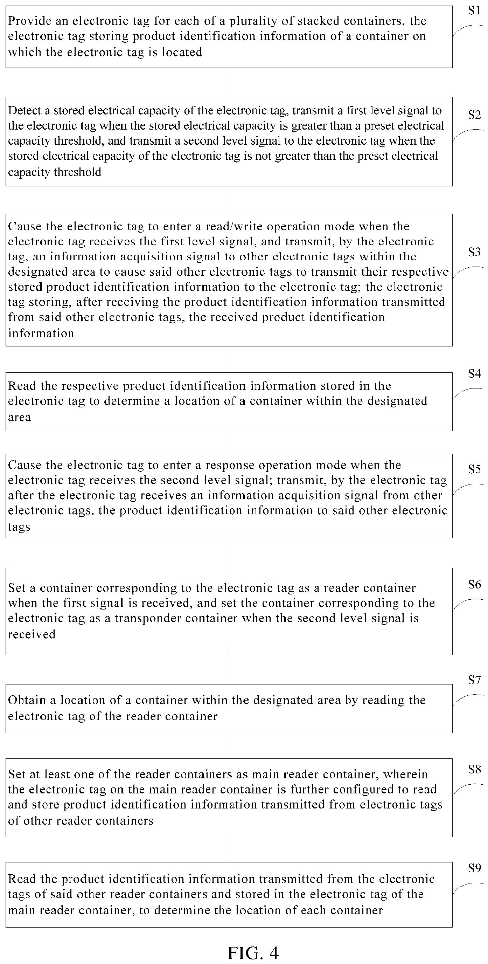

As shown in Fig. 4, the present disclosure also provides a container locating method comprising the steps of:
S1: providing an electronic tag for each of a plurality of stacked containers, the electronic tag storing product identification information of a container on which the electronic tag is located.
S2: detecting a stored electrical capacity of the electronic tag, transmitting a first level signal to the electronic tag when the stored electrical capacity is greater than a preset electrical capacity threshold, and transmitting a second level signal to the electronic tag when the stored electrical capacity of the electronic tag is not greater than the preset electrical capacity threshold. This step may be performed by the detection module.
S3: causing the electronic tag to enter a read/write operation mode when the electronic tag receives the first level signal, and transmitting, by the electronic tag, an information acquisition signal to other electronic tags within the designated area to cause said other electronic tags to transmit their respective stored product identification information to the electronic tag; the electronic tag storing, after receiving the product identification information transmitted from said other electronic tags, the received product identification information.
S4: reading the respective product identification information stored in the electronic tag to determine a location of a container within the designated area. This step may be performed by the reader/writer.

In an example, the method may further include:
S5: causing the electronic tag to enter a response operation mode when the electronic tag receives the second level signal; transmitting, by the electronic tag after the electronic tag receives an information acquisition signal from other electronic tags, the product identification information to said other electronic tags.

Further, in an example, the method may further include:
S6: setting a container corresponding to the electronic tag as a reader container when the first signal is received, and setting the container corresponding to the electronic tag as a transponder container when the second level signal is received.
S7: obtaining a location of a container within the designated area by reading and writing the electronic tag of the reader container.

Further, in an example, the method may further include:
S8: setting at least one of the reader containers as main reader container, wherein the electronic tag on the main reader container is further configured to read and store product identification information transmitted from electronic tags of other reader containers.
S9: reading the product identification information transmitted from the electronic tags of said other reader containers and stored in the electronic tag of the main reader container, to determine the location of each container.

It should be noted that steps in different examples may be performed at the same time and/or replaced each other. For example, the above steps S3 and S6 may be performed at the same time. In a case where steps S3 and S6 are performed, step S4 may be replaced by step S7.

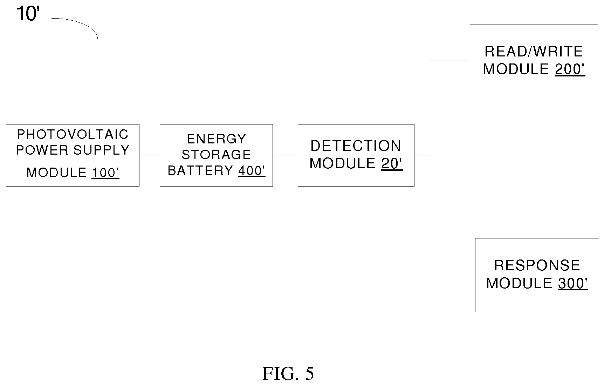

Further, an embodiment of the disclosure also provides an electronic tag 10' integrated with a detection module. Fig. 5 is a structural schematic view of the electronic tag 10'. As shown in Fig. 5, the electronic tag 10' according to this embodiment includes a photovoltaic power supply module 100', an energy storage battery 400', a detection module 20', a read/write module 200', and a response module 300'. The photovoltaic power supply module 100' is configured to convert solar energy into electrical power and output the energy to the energy storage battery 400'; the energy storage battery 400' is configured to store the electricity (electrical power) output by the photovoltaic power supply module 100'; the detection module 20' is configured to detect a stored electrical capacity of the energy storage battery 400' so that when the stored electrical capacity is greater than a preset electrical capacity, the electronic tag 10' enters a read/write operation mode, and when the stored electrical capacity is not greater than the preset electrical capacity, the electronic tag 10' enters a response operation mode; the read-write module 200' is configured to transmit an information acquisition signal to other electronic tags within a designated area when the electronic tag 10' enters the read-write operation mode, and to store, upon receiving product identification information transmitted from said other electronic tags, the received product identification information; and the response module 300' is configured to transmit, when the electronic tag 10' has entered the response operation mode and after the electronic tag receives an information acquisition signal, product identification information of the container corresponding to the electronic tag 10' to an electronic tag having transmitted the information acquisition signal.

In an example, the read-write module 200' may be further configured to provide a reader/writer 30 with the stored product identification information transmitted from each of said other electronic tags so that the reader/writer 30 can determine a location of a container within the designated area according to the product identification information.

It should be understood that the photovoltaic power supply module 100', the energy storage battery 400', the read/write module 200' and the response module 300' in this embodiment may have similar or identical structures or functions as the photovoltaic power supply module 100, the energy storage battery 400, the read/write module 200 and the response module 300 in the embodiment shown in Fig. 3, respectively.

Accordingly, the disclosure also provides a method of locating a container through the electronic tag 10' disposed on a corresponding container, the method comprising:
causing the electronic tag 10' to store product identification information of the container on which the electronic tag 10' is located, the product identification information containing location information of the container on which the electronic tag 10' is located; when the detection module 20' of the electronic tag 10' detects that a stored electrical capacity of the electronic tag 10' is greater than a preset electrical capacity threshold, the detection module 20' transmits a first level signal to the electronic tag 10', and thus the electronic tag 10' enters a read/write operation mode; in the read/write operation mode, the electronic tag 10' transmits an information acquisition signal to other electronic tags within a designated area, and stores, after receiving the product identification information transmitted from said other electronic tags, the received product identification information; when the detection module 20' of the electronic tag 10' detects that the stored electrical capacity of the electronic tag 10' is not greater than the preset electrical capacity threshold, the detection module 20' transmits a second level signal to the electronic tag 10', and thus the electronic tag 10' enters a response operation mode in which the electronic tag 10'; in the response operation mode, the electronic tag 10' transmits, after receiving the information acquisition signal, product identification information of its corresponding container to an electronic tag having transmitted the information acquisition signal.

In an example, the container locating method may further include: when the electronic tag 10' is in the read/write operation mode, the electronic tag 10' provides the stored product identification information transmitted from each of said other electronic tags to the reader/writer 30 so that the reader/writer 30 can determines a location of a container within the designated area according to the product identification information.

In an example, the container locating method may further include: converting, by a photovoltaic cell, solar energy into electrical power to charge the electronic tag 10'.

As can be seen, the present disclosure provides a container locating method which turns on a read/write operation mode or a response operation mode of an electronic tag according to a stored electrical capacity of the electronic tag so that the electronic tag can read product identification information stored in other electronic tags within a designated area. This method solves the problem of read/write failures caused by a too large distance or by blocking with obstacles when reading/writing data in electronic tags on stacked containers in related art, thus realizing a device deployment mode without distinguishing the transponder and the reader/writer, improving the intelligence and practicability of the electronic tag and the work efficiency of container information management, as well as flexibility and simplicity in freight yard layout, and reducing labor cost. On the other hand, when the electronic tags are powered by solar energy, due to different locations and other reasons, some electronic tags are exposed to sufficient light, and have a larger stored electrical capacity (remaining electrical capacity), while said other electronic tags are less (or not) exposed to light and have a smaller stored electrical capacity (remaining electrical capacity). In this case, the method can minimize the power consumption of the electronic tag when its stored electrical capacity is small, thus ensuring a long-term stable operation of the system so that the method may be implemented without a fixed grid.

The structure, features, and effects of the present disclosure have been described in detail with reference to the embodiments shown in the drawings. The above embodiments are merely preferred embodiments of the present disclosure, and the scope of the disclosure is not limited those shown in the drawings or described in the embodiments. Any change made based on the concepts of the present disclosure, or equivalent embodiments that are modified to equivalent variations, should fall within the protection scope of the disclosure as long as they do not depart from the scope covered by the description and the drawings of the disclosure.

## Claims

1. A container locating system comprising an electronic tag (10), a reader/writer (30) and a detection module (20), wherein
the electronic tag (10) is disposed on a container and configured to store product identification information of the container, the product identification information containing location information of the container on which the electronic tag (10) is located;
the detection module (20) is configured to detect a stored electrical capacity of the electronic tag (10), and transmit a first level signal to the electronic tag (10) when the stored electrical capacity is greater than a preset electrical capacity threshold;
the electronic tag (10) is further configured to enter, upon receiving the first level signal, a read/write operation mode and transmit an information acquisition signal to other electronic tags within a designated area to cause said other electronic tags to transmit their respective stored product identification information to the electronic tag (10); the electronic tag (10) storing, after receiving the product identification information transmitted from said other electronic tags, the received product identification information; and
the reader/writer (30) is configured to read the product identification information stored in the electronic tag (10) to determine a location of a container within the designated area.

2. The container locating system according to claim 1, wherein the detection module (20) and the electronic tag (10) are further configured such that:
the detection module (20) transmits a second level signal to the electronic tag (10) upon detecting that the stored electrical capacity of the electronic tag (10) is not greater than the preset electrical capacity threshold; and
the electronic tag (10) enters, upon receiving the second level signal, a response operation mode, and in the response operation mode, the electronic tag (10) transmits, after receiving an information acquisition signal, the product identification information to an electronic tag having transmitted the information acquisition signal.

3. The container locating system according to claim 2, wherein the electronic tag (10) is further configured to set a container corresponding to the electronic tag (10) as a reader container (7 to 9) upon receiving the first level signal, and set the container corresponding to the electronic tag (10) as a transponder container (1 to 6) upon receiving the second level signal; and
the reader/writer (30) obtains, by reading the electronic tag of the reader container (7 to 9), the product identification information to determine a location of a container within the designated area.

4. The container locating system according to claim 3, further comprising: a wireless communication module (40);
wherein the reader/writer (30) is further configured to perform data interaction with the electronic tag (10) through the wireless communication module (40), and set at least one of the reader containers as main reader container (9) through the wireless communication module (40);
the electronic tag on the main reader container (9) is further configured to read and store product identification information transmitted from the electronic tags of other reader containers (7, 8); and
the reader/writer (30) reads information stored in the electronic tag of the main reader container (9) to determine the location of each container, the information being product identification information transmitted from the electronic tags of said other reader containers (7, 8).

5. The container locating system according to claim 4, wherein the electronic tag (10) comprises: a read/write module (200), a response module (300) and a main processor (500);
the main processor (500) is connected to the wireless communication module (40), the read/write module (200) and the response module (300) through a serial port, respectively, and an input end of the main processor (500) serves as an input end of the electronic tag (10);
the read/write module (200) is configured to transmit the information acquisition signal and store the received product identification information; and
the response module (300) is configured to receive the information acquisition signal and transmit the product identification information.

6. The container locating system according to claim 5, wherein the electronic tag (10) further comprises: a photovoltaic power supply module (100) and an energy storage battery (400);
an output end of the photovoltaic power supply module (100) is connected to an input end of the energy storage battery (400), the energy storage battery (400) supplying power to the main processor (500), the read/write module (200) and the response module (300); and
the photovoltaic power supply module (100) is configured to convert solar energy into electrical power to charge the energy storage battery (400).

7. The container locating system according to claim 6, wherein the photovoltaic power supply module (100) comprises: a photovoltaic cell (102) and a power control circuit (101);
an input end of the power control circuit (101) is connected to an output end of the photovoltaic cell (102), an output end of the power control circuit (101) serves as the output end of the photovoltaic power supply module (100), and the power control circuit (101) is configured to control current convergence and voltage regulation output of the photovoltaic cell (102); and
the photovoltaic cell (102) is configured to convert solar energy into electrical power.

8. The container locating system according to any of claims 5 to 7, wherein the read/write module (200) comprises a first antenna (203), a second antenna (204), a third antenna (303), a fourth antenna (304), a first transceiver module (202), a second transceiver module (302), a first microprocessor (201) and a second microprocessor (301);
wherein the first microprocessor (201) is connected to the first transceiver module (202) through a serial port, the first transceiver module (202) transmits the information acquisition signal through the first antenna (203), and the first transceiver module (202) receives the product identification information through the second antenna (204); and
the second microprocessor (301) is connected to the second transceiver module (302) through a serial port, the second transceiver module (302) transmits the product identification information through the third antenna (303), and the second transceiver module (302) receives the information acquisition signal through the fourth antenna (304).

9. A container locating method, comprising:
providing (S1) an electronic tag (10) for each of a plurality of stacked containers (1 to 9), the electronic tag (10) storing product identification information containing location information of the container (1 to 9) on which the electronic tag (10) is located;
detecting a stored electrical capacity of the electronic tag (10), and transmitting a first level signal to the electronic tag (10) when the stored electrical capacity is greater than a preset electrical capacity threshold;
causing (S3) the electronic tag (10) to enter a read/write operation mode when the electronic tag (10) receives the first level signal, and transmitting, by the electronic tag (10), an information acquisition signal to other electronic tags within a designated area to cause said other electronic tags to transmit their respective stored product identification information to the electronic tag (10); the electronic tag (10) storing, after receiving the product identification information transmitted from said other electronic tags, the received product identification information; and
reading (S4) the respective product identification information stored in the electronic tag (10) to determine a location of a container within the designated area.

10. The container locating method according to claim 9, further comprising:
transmitting a second level signal to the electronic tag (10) when the stored electrical capacity is not greater than the preset electrical capacity threshold;
causing (S5) the electronic tag (10) to enter a response operation mode when the electronic tag (10) receives the second level signal; and
transmitting, by the electronic tag (10) after the electronic tag (10) in the response operation mode receives an information acquisition signal, the product identification information to an electronic tag (10) having transmitted the information acquisition signal.

11. The container locating method according to claim 10, further comprising:
setting (S6) a container corresponding to the electronic tag (10) as a reader container (7 to 9) when the first level signal is received, and setting the container corresponding to the electronic tag (10) as a transponder container (1 to 6) when the second level signal is received; and
obtaining (S7) a location of a container within the designated area by reading the electronic tag of the reader container (7 to 9).

12. The container locating method according to claim 11, further comprising:
setting (S8) at least one of the reader containers as main reader container (9), wherein the electronic tag (10) on the main reader container (9) is further configured to read and store product identification information transmitted from electronic tags (10) of other reader containers (7, 8); and
reading (S9) the product identification information transmitted from the electronic tags (10) of said other reader containers (7, 8) and stored in the electronic tags (10) of the main reader container (9), to determine the location of each container.

13. The container locating method according to any of claims 9 to 12, wherein the electronic tag is powered by solar energy.

14. An electronic tag (10') disposed on a container, wherein the electronic tag (10') comprises:
a photovoltaic power supply module (100') which is configured to convert solar energy into electrical power and output the electrical power to an energy storage battery (400');
the energy storage battery (400') which is configured to store the electrical power output from the photovoltaic power supply module (100');
a detection module (20') which is configured to detect a stored electrical capacity of the energy storage battery (400') so that when the stored electrical capacity is greater than a preset electrical capacity, the electronic tag (10') enters a read/write operation mode, and when the stored electrical capacity is not greater than the preset electrical capacity, the electronic tag (10') enters a response operation mode;
a read-write module (200') which is configured to transmit an information acquisition signal to other electronic tags within a designated area when the electronic tag (10') enters the read-write operation mode, and to store, upon receiving product identification information transmitted from said other electronic tags, the received product identification information; and
a response module (300') which is configured to transmit, when the electronic tag (10') has entered the response operation mode and after the electronic tag (10') receives an information acquisition signal, product identification information of its corresponding container to an electronic tag having transmitted the information acquisition signal.

15. The electronic tag (10') according to claim 14, wherein the read-write module (200') is further configured to provide a reader/writer (30) with the stored product identification information transmitted from each of said other electronic tags (10') so that the reader/writer (30) can determines a location of a container within the designated area according to the product identification information.
